# EUROPEAN PATENT APPLICATION

(11) **EP 0 698 464 A2**
(43) Date of publication of application: **28.02.1996**
(21) Application number: 95113180.4
(22) Date of filing: 22.08.1995
(51) Int. Cl.: B29C 41/04, B29C 44/04

(54) **Plastic rotational molded article and method of manufacturing the same**

(30) Priority: 24.08.1994 JP 233949/94; 25.10.1994 JP 297753/94; 31.10.1994 JP 301263/94; 31.10.1994 JP 301264/94; 21.02.1995 JP 70316/95
(71) Applicant: Shiina, Naonori, Yokohama-shi (JP)
(72) Inventor: Shiina, Naonori, Yokohama-shi (JP); Sugita, Tadashi, Chigasaki-shi, Kanagawa-ken (JP); Takase, Hirotugu, Tachikawa-shi, Tokyo (JP); Tsutsui, Tetsuo, Taki-gun, Hyogo-ken (JP)
(74) Representative: Maiwald, Walter, Dr. Dipl.-Chem.

(57) **Abstract**

Disclosed are a plastic rotational molded article (1) and a method of manufacturing the same. The article (1) is prepared by a rotational molding in which a mold having molding materials including a plastic powder (2,3) or granular material (6,7) loaded therein is subjected to a uniaxial rotation such that the rotation axis of the mold is inclined from a vertical line, said mold being rotated at a low rotating speed at which a centrifugal force is not imparted to the molding materials loaded in the mold. Article obtained can be a composite foamed article comprising a crust (3), granular bodies (6,7) and a foamed body (2).

## Description

The present invention relates to a plastic rotational molded article and a method of manufacturing the same. In the present invention, plastic materials or waste materials thereof are molded to prepare large molded articles, foamed articles or composite foamed articles which are used as heat insulating materials, cushioning materials, floating materials, construction materials, civil engineering materials or vehicle materials.

In the conventional rotational molding method, a plastic powder is put in a closed mold and heated by, for example, a hot air stream while the plastic powder is being subjected to a biaxial rotation. The biaxial rotation necessitates a large molding space and makes the molding operation inefficient. Also, the air stream used for the heating has a very high temperature so as to make the mold temperature unduly high locally. As a result, the molded article is caused to bear strain and to have an insufficient strength. Further, the mold is thermally deteriorated at the portion where a hot air stream is likely to be blown. Such being the situation, it was impossible to manufacture molded articles, foamed articles, or composite foamed articles of a complex shape or construction.

Two of the present inventors previously proposed a method of manufacturing a composite foamed article, as described in U.S. Patent No. 3,814,778. In this method, a plastic powder and a cross-linkable and foamable granular material larger than 10 meshes are put in a mold in an amount of 90% or less of the inner volume of the mold. Then, the mold is heated while rotating the mold at a speed of 0.1 to 15 m/min so as to obtain a composite foamed article comprising a crust made of the plastic powder and a foamed material filling the space within the crust. This method certainly permits manufacturing an excellent composite foamed article, but is limited to the manufacture of the special composite foamed article of this type. Of course, the present invention clearly differs from the method disclosed in this U.S. Patent.

One of the present inventors also proposed previously a method of manufacturing a composite foamed article, as described in U.S. Patent No. 3,914,361. In this method, a plastic powder and a foamable granular material having a particle diameter at least 30 times as large as that of the plastic powder are put in an air-tight mold having a valve. Then, the mold is heated with steam from outside to 100 to 250°C while rotating the mold at a speed of 15 m/min or lower so as to form a crust made of the plastic powder, to cause foaming of the foamable granular material. After expelling a gas from within the mold through the valve, the mold is cooled so as to obtain a desired composite foamed article. This method certainly permits manufacturing an excellent composite foamed article, but is limited to the manufacture of special composite foamed articles. Of course, the present invention clearly differs from the method disclosed in this U.S. Patent. above.

An object of the present invention is to provide rotational molded articles such as a large molded article, a molded article of complex shape, and a molded article having two or more phases.

Another object is to provide rotational molded articles such as a foamed article of a high expansion ratio having uniform fine cells and a foamed article of complex shape.

Another object is to provide rotational molded articles such as a composite foamed article having a crust.

Another object is to provide a molding method which permits efficiently manufacturing the rotational molded articles of the present invention.

Still another object is to provide a technique of utilizing plastic waste materials repeatedly.

The present inventors have conducted an extensive study in an attempt to obtain satisfactory plastic rotational molded articles including a large molded article free from an internal strain, a molded article, a foamed article and a composite foamed article each having an excellent strength, and a complex shape and structure well conforming with the mold, and to develop a molding method which permits efficiently manufacturing the rotational molded articles noted above, arriving at the present invention.

According to the present invention, there is provided a plastic rotational molded article prepared by a rotational molding in which a mold having molding materials including a plastic powder or granular material loaded therein is subjected to a uniaxial rotation such that the rotation axis of the mold is inclined from a vertical line, the mold being rotated at a low rotating speed at which a centrifugal force is not imparted to the plastic material.

The present invention also provides a method of manufacturing a plastic rotational molded article, comprising the steps of:
loading molding materials including a plastic powder or granular material in an airtight mold in an amount of at least 5% of the inner volume of the mold; and
heating the mold at temperatures which permit the plastic material loaded in the mold to be melted but not to be decomposed, the mold being subjected to a uniaxial rotation such that the rotation axis of the mold is inclined by at least 5° from a vertical line, the mold being rotated at a low rotating speed at which a centrifugal force may not be imparted to the plastic material loaded in the mold.

The rotational molded article of the present invention is shaped exactly like the mold, is free from an internal strain, and has an excellent strength. The prominent effect of the present invention is derived mainly from the heat treatment which is carried out over a sufficiently long time at temperatures which permit the plastic material loaded in the mold to be melted but not to be decomposed. Specifically, the particular heat treatment permits the mold to be heated uniformly so as to cause the plastic material loaded in the mold to be melted at a uniform temperature. On the other hand, the conventional rotational molding method was solely intended to obtain molded articles efficiently. To achieve the object, used was a hot air stream having a temperature of 300°C or more. In this case, the mold temperature and the melting speed of the plastic material were rendered nonuniform, giving rise to serious drawbacks. For example, the molded articles were caused to bear internal strain. Also, a thermal deterioration was generated in that portion of the molded article against which the hot air stream was likely to be blown.

In the present invention, the heat treatment is carried out at 150 to 220°C for 30 to 120 minutes to permit the plastic material to be melted, but not to be decomposed. It is possible to employ a two-stage heat treatment in the case of using a fine plastic powder and a coarse plastic powder to form a crust consisting of two phases. In this case, the first stage heating is carried out at a low temperature, with the second stage heating being carried out at a high temperature. Likewise, a three-stage heat treatment can also be employed in the present invention. In addition to a hot air stream, steam can also be used as a heat source. In using steam, a latent heat can also be utilized for the heating. Also, a shaded region as in the case of using a hot air stream is not generated in the case of using steam, leading to a shortened heating time. In addition, every portion of the mold of a complex shape can be heated uniformly in the case of using steam. Preferably, the heat treatment should be carried out at 160 to 200°C.

The present invention also provides a composite foamed article having partitions as described herein later. In manufacturing the particular composite foamed article, the mold which is uniaxially rotated is heated from outside to form a crust, followed by introducing steam into the mold to achieve foaming within the mold.

The rotational molded article of the present invention has a uniform thickness. It should be noted in this connection that, in the method of manufacturing the particular article, a plastic powder or granular material is loaded in a mold in an amount of at least 5% of the inner volume of the mold, and that the mold is uniaxially rotated such that the rotation axis of the mold is inclined by at least 5° from a vertical line. Since the rotation axis of the mold is inclined from a vertical line, the plastic material loaded in the mold is uniformly brought into contact with the entire inner surface of the mold in spite of the uniaxial rotation of the mold. In addition, the plastic material loaded in the mold is heated at a uniform heating rate. It follows that it is possible to obtain a molded article or a foamed article of a complex shape having a uniform thickness and conforming exactly with the inner space of the mold. However, if the mold is uniaxially rotated about a vertical axis, the molded article is rendered thinner in the end portions in the vertical direction. A similar situation is brought about in the case of loading a plastic material in the mold in an amount less than 5% of the inner volume of the mold. It is desirable for a plastic material to be loaded in the mold in an amount of at least 10% of the inner volume of the mold. On the other hand, it is desirable for the mold to be uniaxially rotated, with the mold inclined by at least 10° from a vertical line.

The uniaxial rotation employed in the present invention is more efficient, occupies a smaller space, and is lower in facility cost than the biaxial rotation, making it possible to use a steam kiln for the molding operation. To be more specific, a rotating shaft is mounted to the center of the steam kiln. The rotating shaft is branched into four rotational shafts. Further, four rods are connected to each other in parallel with the branched rotational shafts to form a rectangular parallelepiped structure. What should also be noted is that a bottom plate is mounted in the rectangular parallelepiped structure, and a mold is disposed on the bottom plate. As already described, the mold is uniaxially rotated, and the rotation axis of the mold is kept inclined from a vertical line in the present invention. To permit the particular uniaxial rotation, suitable hooks are attached to the bottom plate, rods and mold so as to allow the mold to be joined and fixed to, for example, the bottom plate and mold with, for example, a chain. Alternatively, the steam kiln may be disposed horizontal, with the bottom plate of the rectangular parallelepiped structure held inclined. If the mold is fixed to the bottom plate of the rectangular parallelepiped structure which is held inclined, the rotational axis of the mold can be inclined from a vertical line. It is also possible to mount the steam kiln on a plane inclined from a horizontal plane. In this case, the steam kiln is provided with a rotating shaft. Also, the mold is fixed to the rotating shaft at right angles, with the result that the mold can be rotated and the rotation axis of the mold can be inclined from a vertical line. In the present invention, the heat treatment is carried out at temperatures low enough to prevent the plastic material loaded in the mold from being thermally decomposed. It follows that it is possible to put simultaneously in the steam kiln a mold for a molded article involving a long heating time and another mold for a molded article involving a short heating time. In this case, these two types of molded articles can be manufactured simultaneously by employing a long heating time.

In the present invention, the mold having a plastic material loaded therein is uniaxially rotated slowly so as to separate the loaded plastic material into powder and granular material without imparting a centrifugal force to the loaded material. To promote the separation of the loaded material into powder and granular material, it is possible to give vibration or impact to the mold during the uniaxial rotation thereof.

This invention can be more fully understood from the following detailed description when taken in conjunction with the accompanying drawings, in which:

FIGS. 1A, 1B, 1C, 1D, 1E, 1F and 1G show plastic rotational molded articles of the present invention, in which: FIG. 1A shows a molded article, FIG. 1B shows a foamed article; and each of FIGS. 1C, 1D, 1E, 1F and 1G shows a composite foamed article; and

FIG. 2 shows a double foamable material used for manufacturing a composite foamed article of the present invention having partitions.

The mold used for the manufacture of the rotational molded article of the present invention is formed of a good heat conductor such as iron, aluminum and copper. Specifically, sheets, pipes, castings, etc. of the heat conductive metal exemplified above are joined to each other by welding, bolting, etc. to prepare a mold which prevents the plastic powder loaded therein from being released to the outside during the uniaxial rotation of the mold. In the present invention, steam may be used as a heat source, making it necessary to render the mold completely airtight by using butyl rubber or silicone rubber as a packing so as to prevent steam from entering the mold. Also, a plastic material is foamed within the mold, making it necessary to mount a valve to the mold to permit an excess gas generated within the mold to be released to the outside.

In the present invention, it is possible to manufacture a molded article comprising a plurality of regions differing from each other in thickness or comprising a void region by partially changing the material or thickness of the mold or by attaching, for example, a material poor in its heat conductivity to a part of the mold made of a heat conductive metal. For example, a molded article having recesses and projections on the surface can be manufactured by using as a mold an iron plate having projections and recesses on the surface. In the manufacture of a cylindrical molded article, an iron pipe can be used as a part of the mold. In this case, a mold is assembled by the iron pipe and the side walls closing the open ends of the iron pipe. The mold of this type exhibits a high pressure resistance and permits manufacture of a molded article with moderate angular portions. In addition, the molded article is unlikely to be broken.

In the present invention, cooling is performed by dipping the mold after the molding operation in water or applying shower to the mold.

The plastic powder used in the present invention includes the plastic materials used in the ordinary rotational molding, for example, polyolefins such as polyethylene, polypropylene, and ethylene-vinylacetate copolymer, nylon, ABS resin, polyvinyl chloride, and polycarbonate. It is also possible to use semi-cured materials of thermosetting resins. Further, it is possible to add a foaming agent and/or a crosslinking agent to the plastic powder exemplified above. FIG. 1A shows a molded article 1 obtained by a rotational molding of the plastic powder exemplified above.

In the present invention, it is possible to manufacture a rigid molded article by using a high density polyethylene or polypropylene. It is also possible to manufacture a soft molded article by using a low density polyethylene, ethylene-vinylacetate copolymer or a foamed body thereof.

It is also possible to manufacture a molded article comprising two phases by using a fine powder and a coarse powder as molding materials. It should be noted that outer region of the molded article consists of the fine powder, with the inner region consisting of the coarse powder, because the mold is uniaxially rotated in the present invention in the step of molding the plastic material in the mold. In manufacturing a molded article of this type, it is possible to add, for example, an ultraviolet ray absorbing agent, an antioxidant, a coloring agent, etc. to the fine powder alone. In this case, the additives of the ultraviolet ray absorbing agent, antioxidant, coloring agent, etc. are contained selectively in the outer region alone of the molded article, leading to saving of these additives. In this fashion, it is possible to manufacture a molded article comprising an outer region containing nylon, ABS resin, etc. and an inner region made of polyethylene. It is also possible to manufacture a molded article comprising a cross-linked outer region and an inner region which is not cross-linked. Since the outer region is made of a cross-linked phase, the molded article of this type exhibits improvements in heat resistance, chemicals resistance and weatherability. It is also possible to manufacture a molded article comprising a non-foamed outer region and foamed inner region having an excellent heat insulating and cushioning properties. Of course, it is possible to reverse these outer and inner regions of the molded article.

In the present invention, a molded article comprising three phases can be produced by using a fine powder, a medium powder and a coarse powder. A molded article comprising four phases can also be produced by using a fine powder, a medium powder, a somewhat coarse powder and a coarse powder. In this fashion, it is also possible to produce molded articles comprising five or more phases.

In order to produce a molded article comprising two different phases by using powders having different particle diameters, it is necessary for the powders to include a first powder having a predetermined particle diameter and a second powder having a particle diameter at least two times as large as that of the first powder. Likewise, a molded article comprising three different phases can be produced by using a third powder having a particle diameter at least two times as large as that of the second powder in addition to the first and second powders noted above. In other words, the particle diameters of the second and third powders should be as large as 2 and 4 times as large, respectively, as that of the first powder.

If two kinds of powders having different particle diameters are subjected to a rotational molding by the method of the present invention, these two kinds of powders are heated while moving within the mold so as to be brought into contact with the inner surface of the mold. These powders in contact with the inner surface of the mold are heated through the wall of the mold. As described above, the second powder has a particle diameter at least two times as large as that of the first powder. Thus, each of the weight and volume of the second powder is 8 times as much as that of the second powder. It follows that the second powder, which is low in its temperature elevation rate and exhibits a large kinetic energy, is unlikely to be caught by and melted on the inner surface of the mold. On the other hand, the first powder is readily caught by and melted on the inner surface of the mold. It follows that the produced molded article comprises clearly divided two phases.

The molded article produced by the method of the present invention has a thickness of 1 to 100 mm.

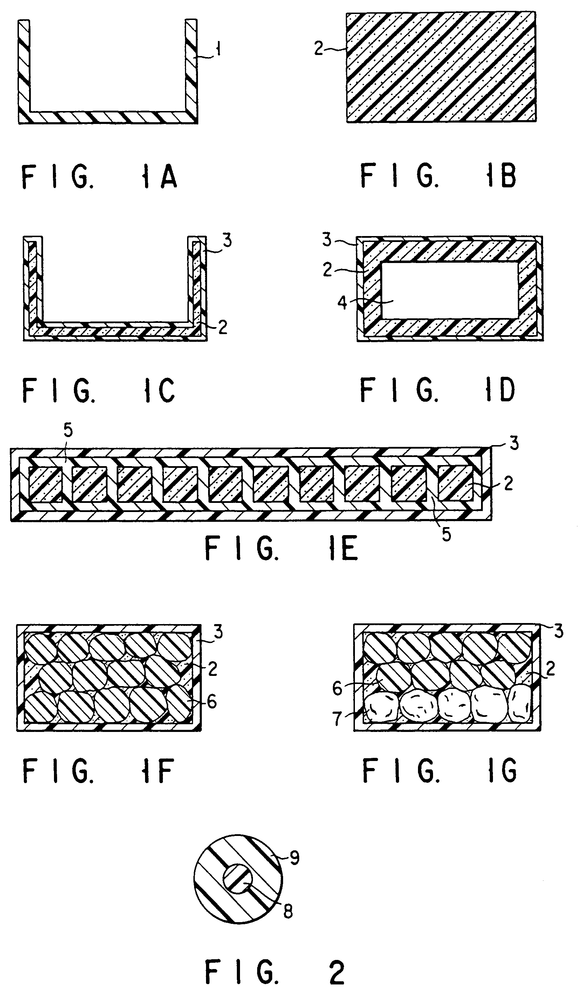

In the present invention, a low density foamed article 2 having uniform fine cells as shown in FIG. 1B can be manufactured by subjecting to a rotational molding a mixture prepared by adding a cross-linking agent such as dicumyl peroxide and a foaming agent such as azodicarbon amide to a polyolefin. It is considered reasonable to understand that, in the present invention, the cross-linked material is indirectly heated within the mold from the outside so as to cause the heated material to be expanded from the inner surface of the mold toward the center of the mold, making it possible to obtain a large foamed article 2 having fine, uniform cells as shown in FIG. 1B.

In the present invention, it is possible to manufacture a composite foamed article as shown in FIG. 1C. In this case, used is a mold having a molding space defined by, for example, outer and inner walls. A plastic powder and a foamable granular material are loaded together within the mold so as to be subjected to a rotational molding. As a result, the powdery material is melted on the inner surface of the mold to form a crust 3, with the foamable granular material positioned inside the crust 3 and, then, foamed to fill the inner space, so as to form the desired composite foamed article. The gas such as air within the mold is released to the outside through a seam of the mold so as to produce a composite foamed article having two phases consisting of the crust 3 and the inner foamed material 2. During formation of a thick crust, a gas is not released through a seam of the mold. To enable the gas to be released to the outside, the mold is provided with a valve in some cases. In general, the crust 3 has a thickness of 0.5 to 10 mm, with the foamed material 2 having a thickness of 10 to 200 mm.

Any type of foamable granular material can be used in the present invention. However, it is desirable to prepare a foamable granular material by adding a cross-linking agent and a foaming agent to a polyolefin and, then, kneading the resultant mixture. Since the granular material used in the present invention can be foamed with a high stability and exhibits a high resistance to heat, composite foamed articles of complex shapes or constructions can be manufactured in the present invention. The cross-linking agent should be added in the present invention to achieve a gel fraction of 80% or less such that the raw material loaded in the mold should be expanded by the foaming to a volume 10 to 50 times as much as that of the raw material.

The granular material should have a grain diameter of 0.5 to 2.0 mm. If the grain diameter is smaller than 0.5 mm, it is difficult for the granular material to be separated completely from the plastic powder used together with the granular material. If the grain diameter is larger than 2.0 mm, however, a long heating time is required, and the foaming is rendered nonuniform. If the grain diameter falls within the range noted above, the granular material is melted on the inner surface of the mold to form a phase of a uniform thickness and, then, the molten phase is foamed to form a phase of a uniform foamed material.

It is desirable for the granular material to be readily movable within the mold and, thus, should desirably be spherical, cubic or close thereto. Further, a cross-linking agent should be added in an amount of 0.1 to 0.25 part relative to 100 parts of polymer. In this case, the phase of the foamed material is bonded satisfactorily to the crust and is unlikely to be shrunk.

It is also possible to manufacture by the rotational molding of the present invention a composite foamed article having three phases, i.e., the crust 3, the foamed material 2 inside the crust 3, and a gas phase 4 such as an air phase in the center of the molded article as shown in FIG. 1D. The presence of the gas phase 4 permits further improving the cushioning properties of the composite foamed article having three phases, compared with a composite foamed article having two phases. The pressure of the gas phase 4 can be made higher than 1 atmospheric pressure so as to further improve the cushioning properties.

In order to manufacture a composite foamed article having three phases, a plastic powder and a foamable granular material are loaded in a mold in an insufficient amount, followed by heating for foaming. In the present invention, the materials loaded in the mold are heated at a uniform heating rate and foamed. As a result, the gas phase 4 is formed to occupy the central portion, and a substantially concentric arrangement is formed by the crust 3, foamed material 2 and gas phase 4. The particular concentric arrangement is desirable in terms of the cushioning properties of the foamed article. It should also be noted that the pressure of the gas phase 4 can be made higher than one atmospheric pressure by, for example, using a larger amount of a foaming agent. What should be noted is that, since the crust 3 and the foamed material 2 are positioned to surround the gas phase 4, the gas is not released to the outside even if the pressure of the gas phase 4 is higher than one atmospheric pressure. Incidentally, it is also possible to allow the gas phase 4 not to be positioned in the central region.

Further, it is possible to manufacture a composite foamed article having three phases as shown in FIG. 1E by using a plastic powder and a double foamable material. As shown in FIG. 1E, the composite foamed article comprises a crust 3, a number of partitioning regions 5, and a number of foamed regions 2 partitioned within the crust 3. FIG. 2 shows a double foamable material used for the manufacture of the composite foamed article shown in FIG. 1E. It is seen that the double foamable material comprises a foamable material 8 and a plastic material 9 covering the foamable material 8. Since a number of partitioning regions 5 are formed within the crust 3, the composite foamed article shown in FIG. 1E is high in its compression strength, flexural strength and impact resistance. Even if the composite foamed article is partly broken upon receipt of impact, the breakage is not expanded to cover the entire region.

For preparing the double foamable material consisting of the foamable material 8 and the plastic material 9 covering the foamable material 8 as shown in FIG. 2, the foamable material 8 is extruded by an extruder into a rod of the foamable material 8, followed by extruding by another extruder the plastic material 9 to cover the outer surface of the rod. Further, the rod of the foamable material 8 covered with the plastic material 9 is heated to form a molten state, followed by cutting under compression the molten rod into small pieces so as to obtain the double foamable granular material as shown in FIG. 2. Incidentally, the cutting noted above may be omitted.

Alternatively, the foamable material 8 may be made granular first, followed by extruding a pipe of the plastic material 9 into the granular material such that the grains are put into the pipe. Then, the pipe of the plastic material having the foamable granular material put therein is cut into small pieces so as to prepare the desired double foamable granular material. It is also possible to use an injection molding machine for preparation of the double foamable granular material of a substantially spherical shape having the foamable material 8 covered with the plastic material 9.

It is possible to manufacture a large composite foamed article having the partitioning regions 5 arranged to form a row as shown in FIG. 1E. In this case, it is necessary to load and foam in the mold double foamable grains each having a diameter smaller than the thickness of the mold, but not smaller than a half of the thickness of the mold. Alternatively, it is possible to load sheets of, for example, a thermosetting resin each having cuts. In this case, these resin sheets are loaded in the mold such that the cuts of the resin sheets are arranged to form a number of partitioned regions within the mold, followed by loading under heat the double foamable grains in the partitioned regions for the desired foaming.

Further, it is possible to manufacture a composite foamed article of the construction that the foamed regions 2 shown in FIG. 1E are replaced by gaseous regions such as air regions, with the crust 3 and partitioning regions 5 shown in FIG. 1E being formed of a foamable material. In this case, a low density foamed article having an apparent density of 0.01 g/cc can also be manufactured by the rotational molding method of the present invention.

The present invention also permits manufacturing a composite foamed article having three phases consisting of a crust 3, large grains 6 positioned within the crust 3, and a foamed material 2 formed by foaming of a foamable granular material and filling the clearance between the large grains 6, 6 and between the crust 3 and the large grains 6, as shown in FIG. 1F. The large grains 6 are positioned substantially uniformly within the crust 3, making the composite foamed article very high in strength, particularly, in compression strength and flexural strength.

Waste materials of a plastics article or vulcanized rubber article can be used as the large grains 6 shown in FIG. 1F. When these waste materials are used as the large grains 6, the void spaces within the grains 6 are filled by the foaming of the foamable granular material to form an integral structure. It is possible to use waste materials of thermosetting resins and fibrous glass reinforced plastic (F.R.P) materials as well as waste materials of thermoplastic resins. It is desirable to use the large grains in an amount of at least 50% of all the loading materials because, in this case, the large grains are brought into direct contact with each other during the rotational molding step so as to make the molded article highly tough. In the present invention, it suffices for the large grains to be larger than the foamable granular material. However, it is desirable for the large grains to be at least two times as large as that of the foamable granular material.

The present invention also permits manufacturing a composite molded article comprising a crust and a granular material filling the inner region of the composite molded article by using only a plastic powder and a granular material such as rubber grains.

The present invention also permits manufacturing a composite molded article having four phases by using a plastic powder, a foamable granular material, large grains 6 larger than the foamable granular material, and heavy grains 7 such as stones, waste concrete particles or waste brick particles, as shown in FIG. 1G. The composite molded article shown in FIG. 1G, which consists of a crust 3, large grains 6, heavy grains 7 and foamed material 2 surrounding large grains 6 and heavy grains 7, has a specific gravity larger than 1 and, thus, sinks in water. It is possible to arrange the heavy grains 7 such as stones in one region of the molded article to permit the molded article to sink in water in said one region and to float on water in other regions. It is also possible to arrange the positions of the heavy grains 7 to cause the molded article to be unlikely to be turned upside down or, even if turned upside down, to be readily brought back to the original state.

The present invention also covers the case where glass wool and a plastic powder are put in a mold to manufacture a molded article having a crust and glass wool disposed within the crust by a rotational molding method. In this case, a large number of holes can be made through the crust to enable the molded article to be suitable for use as a sound adsorbing material. In the rotational molded article of the present invention, it is possible to further cover the crust of the molded article with an additional layer of a material other than plastic materials. For example, the crust may be covered with a layer of clay, wood meal, etc. such that the covering layer may be partly exposed to the outside.

To be more specific, the inner surface of a mold is coated with a mixture prepared by adding a powder, which is not melted even if heated, to a liquid compatible with the plastic powder. Then, the plastic powder and other materials are loaded in the mold under this condition for performing the rotational molding. As a result, a layer of the mixture coated on the inner surface of the mold is formed on the crust of the plastic powder. It should be noted that the liquid compatible with the plastic powder is absorbed by the plastic powder. On the other hand, the powder which is not melted even under heating is embedded in part in the surface region and is exposed to the outside in other parts.

The materials of the powder which is not melted even under heating include, for example, clay, sand, aluminum powder, wood meal, pigments and flame retardants. On the other hand, the liquid compatible with the plastic powder includes, for example, a machine oil. Incidentally, an attempt is being made to provide a structure suitable for gathering fish by using a plastic molded article containing plastic crust, plastic waste, heavy grains such as stones and foamed material. In this case, it is desirable for the structure to include clay attached to the surface because sea weeds tend to grow on the clay and, thus, fish is likely to gather in the structure. The molded article of the present invention is suitable for the particular use because clay can be strongly bonded to the molded article and can be partly exposed to the surface. It should also be noted that the plastic molded article of the present invention can be used as a floating material such as a floating pier. In this case, if wood meal is attached to the surface of the plastic molded article, the pier is rendered unlikely to slide when wetted with sea water. Further, weatherability is an important factor where a plastic molded article is used in the sea-shore or on the sea water. In the present invention, however, the crust of the molded article can be covered with, for example, an aluminum powder, as pointed out above. In this case, ultraviolet light is prevented from being transmitted through the aluminum layer, leading to a high weatherability of the molded article.

It is important to note that the properties of a plastic material remains unchanged even if the waste material of the plastic article is repeatedly used many times for manufacturing a new plastic article. In other words, the plastic material should naturally be repeatedly used many times. Further, the resources of the earth are limited, making it very important to use the plastic material repeatedly.

However, the waste plastic material is not effectively used again in practice. In many cases, the waste plastic material is simply burned or buried in the ground, the most effective reuse being decomposition into the starting monomers of the plastic material. The properties that the plastic material, which is not denatured by processing, can be repeatedly used many times are neglected in such a manner of disposal of the waste plastic material. The main reason for failure in reuse is that the waste plastic material consists of a polymer mixture and contains foreign materials such as wood pieces, metal pieces and sand as well as various additives. Such being the situation, the extrusion rate is fluctuated in the case of employing an ordinary extrusion molding, which is popular nowadays for the molding of a plastic material, for the reuse of the waste plastic material, resulting in failure to obtain a satisfactory molded article. In short, the extrusion molding, which certainly permits manufacturing a molded article of a high accuracy with a high efficiency, is not suitable for manufacturing various molded articles by utilizing the waste plastic material.

In the present invention, a plastic powder is subjected to a rotational molding. In general, the rotational molding using a plastic powder is somewhat inferior to the extrusion molding in the molding efficiency and dimensional accuracy of the molded article. However, if the components of the waste material are compatible with each other, the waste material containing components differing from each other in melt index (MI), molecular weight, and density can be subjected to a rotational molding. Naturally, the waste plastic material can also be used as the raw material in the rotational molding of the present invention, if the waste material is classified depending on the material thereof and pulverized in a powdery form. In this case, it is desirable to set the thickness of the crust at a high level and set the design strength at a level somewhat lower than the level in the case of using the best single material. In short, the waste of the material used in the ordinary rotational molding can be used in the present invention as a plastic powder. Also, as already pointed out, the rotational molding is somewhat inferior to the extrusion molding in the dimensional accuracy of the molded article. This implies that the rotational molding is suitable for the manufacture of large articles which do not require a high dimensional accuracy. In other words, the waste material can be more easily used in the rotational molding than in the extrusion molding requiring a high accuracy.

The foamable granular material used in the present invention can be prepared by, for example, adding a cross-linking agent and a foaming agent to a low density polyethylene. The foamable material of this type can be foamed with a very high stability, and the resultant foam exhibits a high resistance to heat. In addition, any material can be foamed well regardless of the melt index and density of the material as far as a low density polyethylene is used as a base material. It is considered reasonable to understand that polyethylene is cross-linked to improve the viscoelasticity in the melting step and, then, foamed, leading to the good foaming achieved in the case of using a low density polyethylene as a base material.

The foamable granular material used in the present invention is in the form of small grains having a diameter of 0.5 to 2 mm. Also, the foaming is somewhat suppressed in the molding step. As a result, no problem is generated even if the foaming of the material is somewhat uneven, making it possible to manufacture large foamed articles or composite foamed articles. Also, the waste of a low density polyethylene, if classified appropriately, can be used in the present invention as a foamable granular material. Since the foamable granular material is mixed in a relatively small mixing ratio in preparation of the composite foamed article, the particular material can be sufficiently used singly in general. Further, the foamable granular material is positioned inside the crust, making it possible to use the waste material of any color.

In manufacturing the partitioned composite foamed article of the present invention, it is possible to use the waste of a thermoplastic material, which has been classified appropriately, as a plastic material covering the foamable material. Since the waste is positioned inside the crust, the color of the waste need not be worried about. Also, no problem is generated even if the waste material contains a small amount of impurities.

As described previously, large grains larger than the foamable granular material can also used in the rotational molding method of the present invention. These large grains can be provided by, for example, the waste of thermosetting material such as FRP and the waste of vulcanized rubber in addition to the waste of thermoplastic material. These large grains are positioned in the central portion of the mold, with the clearance among the large grains being filled with the foamed material such that the large grains are strongly bonded to each other and to the crust of the molded article.

Chlorine gas or hydrogen chloride is not generated, even if granular polyvinyl chloride is used in the rotational molding method of the present invention. The waste of the molded article or composite foamed article manufactured by the method of the present invention can be crushed and can also be used as large grains in the rotational molding method of the present invention. Since these grains are positioned in the central portion of the mold, the color of the grains need not be worried about. Also, no problem is generated even if a small amount of impurities are contained in the large grains.

As described above, the molded article of the present invention comprises a crust, a foamed material, a partitioning material and large grains. In the present invention, the waste plastic material can be used as a material of any of these portions of the molded article. In general, the raw materials of the molded article comprise 10 to 30% of the crust material, 5 to 15% of the foamable material, and 40 to 85% of the partitioning material and large grains. The molded article manufactured by using these raw materials is light in weight, tough, exhibits heat insulating and cushioning properties and, thus, can be widely used in various fields.

Serious studies were once conducted in an attempt to develop plastic articles such as pallets which can be used in place of wooden articles, though these studies were not successful because the price of plastic was much increased because of the so-called oil shock. However, the world-wide shortage of the wood resources is unavoidable, making it important to develop a technique which permits manufacturing plastic articles which can be used in place of wooden articles by utilizing the waste plastic article as the raw material. To reiterate, the rotational molding method of the present invention permits utilizing the waste plastic material as the raw material, permits manufacturing a large molded article or composite foamed article of a complex shape in a single step, and also permits using a mold made of iron, leading to a low manufacturing cost. In addition, the cross-linking agent and the foaming agent used as additives are not costly. It follows that the rotational molding method of the present invention is capable of dealing with the problem of wood shortage and, at the same time, permits solving the problem generated by the waste plastic material. It should be noted that the composite foamed article of the present invention has a density of about 0.05 to 0.5 g/cc, bears cells, comprises a crust and inner phase and, thus, is very close to wood.

The Examples given below will more clearly set forth the technical idea of the present invention.

### Example 1:

Prepared was a two-part mold of panda made of aluminum castings and having an inner volume of about 100 liters. Loaded in the mold were 2.5 kg of an ethylene-vinylacetate copolymer composition containing an ultraviolet ray absorber, an antioxidant and a coloring agent, said copolymer containing 15% of the vinylacetate units, having a melt index (MI) of 5 and passing through 50 meshes. Also loaded were 2.5 kg of cubes, each having a side of 1 mm, of a foamable compound prepared by kneading a mixture consisting of 100 parts of a low density polyethylene having a density of 0.92 g/cc and an MI of 3, 0.2 part of dicumyl peroxide and 6 parts of azodicarbon amide, and 10 kg of cubes, each having a side of 3 mm, of a high density polyethylene having a density of 0.94 g/cc and an MI of 3. These materials were loaded in an amount of 20% by volume of the inner space of the mold.

After the loading, the rotation axis of the mold was inclined by 15° from a vertical line and fixed at this inclined position, followed by heating the mold with steam at 160°C for 20 minutes, at 180°C for 20 minutes, and at 200°C for 20 minutes while uniaxially rotating the mold at a speed of 2 rpm. The molded article obtained after the cooling was shaped exactly like the inner space of the mold. The surface layer, 2 mm thick, of the molded article was found to comprise the ethylene-vinyl acetate copolymer which was not foamed. As a result, the molded article was beautiful, excellent in weatherability and unlikely to be scratched. Further, a polyethylene foamed phase having a density of 0.1 g/cc and a thickness of 20 mm was found to be positioned below the surface layer, with the result that the molded article was elastic and high in impact resistance. Still further, a high density polyethylene phase, 10 mm thick, was found to be positioned below polyethylene foamed phase so as to toughen the molded article. It follows that the molded article was highly suitable for use as a children's outdoor plaything.

### Comparative Example 1:

A molded article was produced as in Example 1, except that rotation axis of the mold was fixed along a vertical line. Holes were found to have been made in the side walls of the resultant molding of panda. In addition, the molded article was found to be deformed.

### Comparative Example 2:

A molded article was produced as in Example 1, except that the amount of each of the materials loaded in the mold was one-fifth of the amount in Example 1. As a result, the molding materials were loaded in an amount of 4% of the inner volume of the mold. The resultant molding of panda was found to be thinner in the central portion in each of the side walls. In addition, the molded article was found to be somewhat deformed.

### Example 2:

A double cylindrical structure used as a mold was prepared by using a thinner iron pipe sized at 500 mm in outer diameter, 1700 mm in length and 20 mm in wall thickness, and a thicker iron pipe sized at 630 mm in inner diameter, 1750 mm in length and 25 mm in wall thickness. Specifically, a circular iron plate was welded to one end of the thinner pipe to form a bottom, with a fin having a width of 100 mm being mounted along the outer circumferential surface of the thinner pipe at the other end. Likewise, a circular iron plate was also welded to one end of the thicker pipe to form a bottom, with a fin having a width of 35 mm being mounted along the outer circumferential surface of the thicker pipe at the other end. Then, the thinner pipe was inserted into the thicker pipe such that the fins thereof were positioned to overlap each other with a silicone rubber, 3 mm thick, interposed therebetween. These fins were joined to each other with a bolt. Further, the resultant double cylindrical structure was fixed with a bolt-nut assembly at the upper and lower positions of the double cylindrical structure and provided with a gas-releasing valve.

The molding space of the resultant mold defined between the inner and outer pipes of the double cylindrical structure was loaded with a mixture consisting of 35 kg of a high density polyethylene powder passing 50 meshes and 0.4 kg of an azodicarbon amide powder and with 7 kg of cubes, each having a side of 1 mm, of a foamable compound prepared by kneading a mixture consisting of 100 parts of a low density polyethylene, 0.2 part of dicumyl peroxide and 20 parts of azodicarbon amide. The loading amount was found to be 40% by volume of the molding space of the mold.

Then, the rotation axis of the mold was inclined by 60° from a vertical line. Under this inclined state, the mold was uniaxially rotated at 2 rpm within a steam kiln for the heating at 160°C for 30 minutes and, then, at 200°C for 30 minutes to achieve a rotational molding, followed by releasing the gas from within the mold through the gas-releasing valve. The molded article obtained after cooling was found to be 500 mm in inner diameter and 1750 mm in length, which was open at the upper part and exactly conformed with the molding space of the mold. The molded article was found to include a crust, which had been expanded by foaming with an expansion ratio of 2 into a thickness of 10 mm, and an inner foamed region, which had been expanded by foaming with an expansion ratio of 40 into a thickness of 45 mm as well as upper and lower screwed portions through which water flows into and out of the molded article, respectively. A crust was also found to be formed in the screwed portion. Since the molded article included the crust having an expansion ratio of 2 and the foamed heat insulating phase having an expansion ratio of 40, the molded article was tough and exhibited an excellent heat insulating properties. In addition, the foamed heat insulating phase was completely surrounded by the crust, and the heat insulating phase was formed of a cross-linked polyethylene. The particular construction enabled the molded article to maintain excellent heat insulating properties even if the molded article was left to stand under a high humidity over a long period of time. Thus, the molded article provided with a lid was found to be quite satisfactory for use as a warm water container for a solar heating system or in an electric heating system utilizing electric power at midnight. It was also found possible to embed a nichrome wire for the heating purpose in a lower portion of the crust inside the warm water container.

### Example 3:

A mold comprising a mold body having a molding space sized at 900 × 600 × 100 (mm) and a lid was loaded with 2 kg of a powdery material prepared by adding 0.5 part of dicumyl peroxide and 2 parts of azodicarbon amide to 100 parts of ethylene-vinylacetate copolymer powder and with 2 kg of the foamable compound grains equal to those used in Example 2. These molding materials were loaded in an amount of 13% by volume of the molding space of the mold. Then, the mold was heated for the molding purpose at 180°C for 60 minutes within a steam kiln while being uniaxially rotated at a speed of 1.5 rpm. During the rotation, the rotation axis of the mold was kept inclined by 30° from a vertical line. The resultant molded article, which was shaped exactly like the mold, included a crust having a density of 0.3 g/cc and a thickness of 5 mm, an inner foamed phase having a density of 0.03 g/cc and a thickness of 20 mm, and a gas phase positioned in the center and having a thickness of 50 mm. The crust was found to consist of a foamed material having closed cells. The molded article was found to be excellent in its cushioning and heat-insulating properties. Also, since the crust of the molded article was formed of a foamed material having closed cells, the surface of the molded article was capable of being swept with a wet cloth or being disinfected with alcohols or formalin. Further, since the molded article exhibited an excellent heat-insulating property, it was possible to prepare a satisfactory sleeping mat by simply covering the molded article with a sheet. Still further, the molded article was found to be suitable for use in a hospital as a cushioning material for preventing infection. What should also be noted is that the entire surface of the cushioning material receives a uniform pressure, with the result that bedsores can be effectively prevented when the cushioning material is used as a sleeping mat.

### Example 4:

A mold of a pallet sized at 1100 × 1100 (mm) and having an inner volume of 50 liters was prepared by using two deck boards providing the upper and lower walls of the mold and each having a thickness of 20 mm and four vertical plates connected to each other to define the side wall of the mold and each having a height of 100 mm. The resultant mold was loaded with 5 kg of a powdery material prepared by adding 1.5 parts of azodicarbon amide to 100 parts of a high density polyethylene, 1.5 kg of the foamable compound grains equal to those used in Example 2, and 25 kg of waste cross-linked polyethylene which was shaped into cubes each having a side of about 2 mm. These molding materials were loaded in an amount of 75% by volume of the molding space of the mold. Then, the mold was heated with a hot air stream of 220°C for 90 minutes while being uniaxially rotated at a speed of 1 rpm. During the rotation, the rotation axis of the mold was kept inclined by 45° from a vertical line. The resultant molded article was shaped exactly like the mold and found to include a crust having a thickness of 3 mm, a substantially continuous inner phase formed of a cross-linked polyethylene, and a foamed material of a high expansion ratio filling the clearance between the crust and the inner phase. The crust was found to consist of a foamed material having a density of 0.4 g/cc and made of the high density polyethylene. The molded article was excellent in its impact resistance, flexing resistance and compressive resistance, and was capable of withstanding a load of 1,000 kg. Further, it was of no difficulty to keep the molded article clean. It follows that the molded article was suitable for use as a pallet in a food factory.

### Example 5:

A mold was prepared by utilizing a thinner iron pipe having an outer diameter of 200 mm and a length of 1500 mm and a thicker iron pipe having an inner diameter of 330 mm and a length of 1500 mm. Specifically, a fin having a width of 30 mm was mounted at each end to each of these thinner and thicker pipes such that the fins mounted to the thinner pipe extended inward, with the fins mounted to the thicker pipe extending outward. Then, the thinner pipe was completely inserted into the thicker pipe, followed by mounting disks to the open ends of the resultant double cylindrical structure so as to form a molding space defined by the outer surface of the thinner pipe and the inner surface of the thicker pipe. The disk at each end was capable of fixing to the fin with a bolt, with a silicone rubber sheet interposed between the disk and the fin, so as to prevent inflow of heat into the molding space through the end portions of the pipe. Further, the thicker pipe was threaded at both end portions each in a length of 100 mm from the end and gas-releasing valves were mounted. Still further, two laths each having a thickness of 1 mm were formed by welding into two pipes having inner diameters of 210 mm and 320 mm, respectively, and each having a length of 1500 mm, and inserted into the mold.

The mold of the particular construction was loaded with 38 kg of a powdery mixture prepared by adding 2 parts of dicumyl peroxide to 100 parts of a high density polyethylene, and 1.5 kg of foamable compound cubes equal to those used in Example 2. These molding materials were loaded in an amount of 95% by volume of the molding space of the mold. Then, the mold was heated for the molding purpose at 160°C for 30 minutes and, then, at 200°C for 30 minutes while being uniaxially rotated at a speed of 1 rpm, followed by releasing the gas from within the mold. During the rotation, the rotation axis of the mold was kept inclined by 45° from a vertical line. The resultant molded article, which was a pipe, was shaped exactly like the mold and found to include an inner phase, 35 mm thick, having a density of 0.03 g/cc and a cross-linked high density polyethylene phase, 15 mm thick, reinforced by the two laths at both end portions in the radial direction. The molded article was also found to be excellent in its strength, heat resistance and heat-insulating property, capable of mutual connection with sleeves and, thus, suitable for use as a hot spring pipe. As a matter of fact, it was possible to allow warm water of 80°C to flow through the pipe with a hydraulic pressure of 10 kg/cm². Further, the pipe was found to withstand the soil pressure.

### Example 6:

A double foamable granular material was prepared first. In the first step, 0.3 PHR of dicumyl peroxide and 20 PHR of azodicarbon amide were added to a low density polyethylene, and the resultant mixture was fully kneaded, followed by extruding the kneaded mass to form a rod having a diameter of 30 mm and cutting the rod to prepare cut pieces each having a length of 30 mm. On the other hand, 0.3 PHR of dicumyl peroxide and 1.5 PHR of azodicarbon amide were added to a low density polyethylene, and the resultant mixture was fully kneaded, followed by extruding the kneaded mass to form a pipe having an inner diameter of 70 mm and a wall thickness of 5 mm. Then, the foamable pieces noted above were put into the pipe, followed by cutting the pipe in a length of 90 mm, with a single foamable piece contained in the cut piece of the pipe. Further, the cut pieces of the pipe were sealed to prepare a desired double foamable granular material.

In this case, a mold sized at 500 × 500 × 500 (mm) was partitioned into 125 chambers each sized at 100 × 100 × 100 (mm) by using phenolic resin sheets each sized at 500 × 100 × 0.5 (mm) and provided with cuts at an interval of 100 mm in the longitudinal direction. Each cut, which was 1 mm wide and 50 mm long, was formed to extend from one longitudinal end to reach the center in the width direction of the phenolic resin sheet. A first group of four phenolic resin sheets of the particular structure were held upright with one longitudinal end constituting the bottom such that the cuts were positioned in the upper half portion, and equidistantly arranged in parallel at an interval of 100 mm. Also, a second group of four phenolic resin sheets of the same structure were similarly arranged, except that these resin sheets were allowed to extend in a direction perpendicular to the resin sheets of the first group and that the cuts of the resin sheets were positioned in the lower half portion. Under this condition, these phenolic resin sheets of the first and second groups were combined with each other such that the cuts formed in these resin sheets were allowed to be engaged with each other. The combined structure was put in the mold so as to define 25 cubic chambers each having a side of 100 mm, followed by putting a sheet sized at 500 × 500 × 0.5 (mm) to cover the cubic chambers defined in the mold.

The procedures described above were repeated five times so as to define five stages of cubic chambers, each stage having 25 cubic chambers. Naturally, 125 cubic chambers (25 × 5 stages) were defined within the mold. Each cubic chamber was loaded with one double foamable granular material and 1.5 kg of a high density polyethylene powder.

Then, the mold was heated with steam from outside at 160°C for 15 minutes to form a crust and, then, with steam introduced into the mold at 200°C for 25 minutes to achieve foaming. During the heat treatment, the mold was kept uniaxially rotated at a speed of 2 rpm and the rotation axis of the mold was also kept inclined by 10° from a vertical line.

The resultant molded article was shaped exactly like the mold and included a smooth crust. Further, well foamed regions and partitioning regions of a low expansion ratio were regularly partitioned within the crust. The molded article was found to have an apparent density of 0.2 g/cc and to be excellent in its impact resistance. Even if the molded article was partly broken, the breakage was not expanded to cover the entire region. Such being the situation, the molded article was suitable for use as a floating material. Where a plurality of molded articles were coupled with each other by utilizing projections and recessed formed in the molded articles to prepare a large article, the coupling strength was found to be very high.

### Example 7:

A mold for a boat 1 meter long and 0.5 meter wide was prepared by using inner and outer molds made of iron. Specifically, each of the inner and outer molds was provided with a fin, and these fins were joined to each other with a bolt to prepare a desired mold having a molding space of 100 liters. Then, the mold was loaded with 5 kg of a high density polyethylene powder, 2 kg of the foamable compound cubes equal to those used in Example 2, 20 kg of cubic waste grains, each having a side of 3 mm, of hard polyvinyl chloride, and 20 kg of crushed stone grains each having a side of about 10 mm. These molding materials were loaded in an amount of 50% by volume of the molding space of the mold.

Then, the mold was heated with steam at 160°C for 30 minutes and, then, at 200°C for 30 minutes while being uniaxially rotated. During the rotation, the rotation axis of the mold was inclined by 15° from a vertical line. After the heating, the mold was brought back to its horizontal position for the cooling. The resultant molded article was found to include a crust having a thickness of 1.5 mm and made of the high density polyethylene. Formed within the crust were polyvinyl chloride regions which were arranged consecutively, with the clearance therebetween being filled with a foamed material. Further, the crushed stone grains each covered with a foamed material were gathered in the bottom portion of the molded article of the boat. The boat was shaped exactly like the mold and found to be tough and to exhibit buoyancy. Further, the boat was unlikely to be turned upside down in water. Even if turned upside down in water, the boat was found to float on water and to be brought back to the original position without difficulty.

### Example 8:

A mold sized at 1,000 × 1,000 × 100 (mm) and provided with a valve was loaded with 1 kg of a powdery mixture prepared by adding 0.2 part of dicumyl peroxide and 1.5 parts of azodicarbon amide to 100 parts of a low density polyethylene powder, 20 kg of high density polyethylene cubes each having a side of 1 mm, and 4 kg of cubes each having a side of 3 mm and prepared by kneading a mixture consisting of 100 parts of a low density polyethylene, 0.2 part of dicumyl peroxide and 15 parts of azodicarbon amide. These molding materials were loaded in an amount of 30% by volume of the molding space of the mold.

Then, the mold was heated at 160°C for 30 minutes, at 180°C for 30 minutes and, then, at 200°C for 30 minutes while being uniaxially rotated at a speed of 2 rpm, followed by releasing the gas from within the mold. During the rotation, the rotation axis of the mold was kept inclined by 45° from a vertical line. The resultant molded article was shaped exactly like the mold and found to include a crust having a density of 0.3 g/cc and formed of a polyethylene foamed material having spherical cells, a high density polyethylene phase having a thickness of 10 mm and in contact with the crust, and a polyethylene foamed phase having a density of 0.03 g/cc and positioned in the central region of the molded article. The molded article exhibited a high strength and was excellent in heat insulating properties. Further, since the molded article included a crust formed of a foamed material having closed cells and a low density central region formed of a polyethylene foamed material having a density of 0.03 g/cc, the molded article was found to be suitable for use as a heat-insulating plate in the manufacture of pre-fabrication type water baths. When used as such a heat-insulating plate, water did not leak through the joined portion. Also, adjacent plates were not deviated from each other. Further, packing need not be used in assembling these plates for manufacturing the water bath.

### Example 9:

A butyl rubber sheet was attached to each of four outer surfaces of a mold sized at 500 × 500 × 250 (mm) and provided with a valve so as to limit the heat inflow through the these surfaces into the mold. Then, the mold was loaded with 0.5 kg of a powdery material prepared by adding 0.2 part of dicumyl peroxide and 15 parts of azodicarbon amide to 100 parts of a low density polyethylene powder, 1.0 kg of cubes each having a side of 1 mm and prepared by adding 0.2 part of dicumyl peroxide and 10 parts of azodicarbon amide to 100 parts of a low density polyethylene, 2.0 kg of cubes each having a side of 2 mm and prepared by adding 0.2 part of dicumyl peroxide and 5 parts of azodicarbon amide to 100 parts of a low density polyethylene, and 4.0 kg of cubes each having a side of 4 mm and prepared by adding 0.2 part of dicumyl peroxide and 2.5 parts of azodicarbon amide to 100 parts of a low density polyethylene. Then, the mold was heated at 160°C for 20 minutes, at 180°C for 20 minutes and, then, at 200°C for 20 minutes while being uniaxially rotated at a speed of 2 rpm, followed by releasing the gas from within the mold. During the rotation, the rotation axis of the mold was inclined by 30° from a vertical line.

The resultant molded article was found to consist of four foamed phases differing from each other in the expansion ratio including the outermost phase in direct contact with the inner surface of the mold, the innermost phase in the center of the mold, and two phases interposed between the outermost and innermost phases. The expansion ratio was 30 for the outermost phase, 20 for the phase adjacent to the outermost phase, 10 for the phase adjacent to the innermost phase, and 5 for the innermost phase. Each of these four phases had a thickness of about 3.5 mm. Since the expansion ratio was increased step-wise from the innermost phase toward the outermost phase and the resultant molded article was a thick foamed article, the molded article exhibited excellent cushioning properties to make the molded article suitable for use as a cushioning mat in the high jump included in the field and track events.

### Comparative Example 3:

A molded article was produced as in Example 9, except that the mold was heated at 250°C for the molding purpose. The phase separation was unsatisfactory in the resultant molded article. Also, the molded article was deformed.

### Example 10:

An iron mold sized at 500 × 500 × 25 (mm) was loaded with 1 kg of a powdery high density polyethylene having a density of 0.94 g/cc and a melt index (MI) of 3 and 4.5 kg of rubber cubes each having a side of about 5 mm and prepared by cutting a waste tire. These molding materials were loaded to fill completely the molding space of the mold. Then, the mold was heated with steam at 180°C for 30 minutes while being uniaxially rotated at a speed of 3 rpm. During the rotation, the rotation axis of the mold was kept inclined by 15° from a vertical line. The resultant molded article was shaped exactly like the mold and found to include a crust having a thickness of 1 mm and an inner region filled with the rubber particles.

Circular holes each having a diameter of 3 mm were made in the molded article except the peripheral region having a width of 5 cm. These holes were made at a rate of 1 hole/1 cm². The molded article having these holes made therein exhibited cushioning properties, permitted water permeation and, thus, was suitable for use as a cushioning material in a footpath.

### Example 11:

For preparation of a double foamable granular material, a mixture consisting of a low density polyethylene having a density of 0.92 g/cc and a melt index (MI) of 2, 0.2 PHR of dicumyl peroxide and 20 PHR of azodicarbon amide was kneaded in an extruder and, then, extruded to form a rod having a diameter of 6 mm, followed by coating the rod with a high density polyethylene having a density of 0.94 g/cc and a MI of 5, the coated layer having a thickness of 6 mm. The resultant rod coated with the high density polyethylene was cut under compression into small pieces each having a length of 18 mm so as to prepare the desired double foamable granular material.

Then, a mold sized at 500 × 500 × 25 (mm) was loaded with 0.5 kg of a powdery material prepared by adding 1 PHR of azodicarbon amide to a powdery material of a high density polyethylene having a density of 0.94 g/cc and a MI of 5, and 1.5 kg of the double foamable granular material prepared in advance as described above. The mold was heated from outside with steam at 150°C for 20 minutes to form a crust and, then, steam of 180°C was introduced into the mold for the heating for foaming for 20 minutes. During the heat treatment, the mold was kept uniaxially rotated at a speed of 1 rpm. Also, the rotation axis of the mold was kept inclined by 15° from a vertical line during the uniaxial rotation.

The resultant molded article was shaped exactly like the mold and found to include a crust consisting of a foamed region of a low expansion ratio and a large number of foamed regions of a high expansion ratio covered with partitioning regions and positioned within the crust. The foamed regions of a high expansion ratio, which were separated from each other by the partitioning regions, were arranged substantially equidistant each other. In other words, the partitioning regions were formed as a lattice in a thickness direction of the molded article. In this case, the molded article was reinforced appropriately by the crust and the partitioning regions and, thus, was high in its compression resistance, impact resistance and flexing resistance. In addition, the molded article was excellent in its sound-proofing properties and airtightness. As a matter of fact, sound generation was much suppressed when something was allowed to impinge against the molded article, making the molded article suitable for use as a floor material.

As described above in detail, the molding method of the present invention is featured in that the molding material is loaded in an amount of at least 5% by volume of the molding space (inner space) of the mold. Also, the mold is uniaxially rotated in the molding step such that the rotation axis of the mold is inclined by at least 5° from a vertical line. The particular technique of the present invention permits diminishing the space required for the molding operation and also permits an efficient molding operation. The present invention is also featured in that the mold is heated at temperatures at which the plastic material is melted, but is not decomposed. Further, the mold is rotated at a low speed at which a centrifugal force is not imparted to the molding material loaded in the mold. As a result, the mold can be heated uniformly. It follows that strain is not generated within the molded article. Also, the molded article has a high strength and is free from thermal deterioration. It follows that the molding method of the present invention makes it possible to manufacture large molded articles, foamed articles, and composite foamed articles of complex shape. Of course, the articles manufactured by the method of the present invention are shaped exactly like the mold.

To be more specific, the present invention is featured as summarized below:
(a) The mold is heated at relatively low temperatures at which the plastic material is melted but is not decomposed. This makes it possible to put a mold requiring a long heating time and another mold requiring a short heating time in a single kiln so as to obtain the two molded articles simultaneously over a long heating time.
(b) Large molded articles, foamed articles and composite foamed articles can be provided by using plastic-based molding materials. These articles can be used as heat-insulating materials, cushioning materials, floating materials, construction materials, civil engineering materials, vehicle materials, etc. which can be used for assembling various articles such as pallets, troughs, sleeping mats, cushioning mats, buoys, floating pier, boats, tanks, heat-insulating vessels, pipes, doors, floors, animal toys, and large playthings.
(c) It is possible to provide a large foamed article of a low density having fine uniform cells.
(d) A composite foamed article of a two-layer structure consisting of a crust and an inner foamed material layer, which can be manufactured in a single step, can be used as a good heat-insulating material and, thus, contributes to energy saving.
(e) The present invention provides a composite foamed article having three phases consisting of a crust, a foamed layer positioned inside the crust, and a gas phase positioned in the center. The article of this construction is highly useful as a cushioning material.
(f) The present invention provides a composite foamed article comprising a crust, a number of partitioning regions, and a number of foamed regions partitioned within the crust.
(g) The present invention provides a composite foamed article having three phases consisting of a crust, large grains positioned within the crust, and a foamed material layer filling the clearance within the crust having the large grains disposed therein. The article of this construction is useful as a substitute for wood.
(h) The present invention provides a composite molded article having four phases consisting of a crust, large grains, heavy grains, and a foamed material filling the clearance around these large grains and heavy grains within the crust. The article of this construction is useful as a floating material.
(i) The waste plastic material can be used as raw materials of any of the powder, foamable granular materials, partitioning materials and large grains included in the rotational molded article of the present invention. Thus, the present invention contributes to an effective utilization of the waste plastic material.
(j) A composite molded article of the present invention comprises a crust and an inner phase, and contains cells. The article resembles wood in construction and can be used as a substitute for wood.
(k) Where the molded article has a plurality of phases, additives such as an ultraviolet ray absorbing agent, an antioxidant, and a colorant can be added selectively to the crust alone. Thus, these additives can be used efficiently and economically.
(l) The steam kiln used in the present invention permits uniaxially rotating the mold, keeping the rotation axis of the mold inclined from a vertical line, for achieving the rotational molding. The uniaxial rotation leads to a diminished space requirement in the rotational molding.

## Claims

1. A plastic rotational molded article prepared by rotational molding characterized in that a mold having molding materials including a plastic powder or granular material loaded therein is subjected to a uniaxial rotation such that the rotation axis of the mold is inclined from a vertical line, said mold being rotated at a low rotating speed at which a centrifugal force is not imparted to the molding materials loaded in the mold.

2. The article according to claim 1, characterized in that said article is a composite foamed article having three phases consisting of a crust (3), foamed bodies (2) disposed inside the crust (3), and a gaseous phase (4) positioned in the central region.

3. The article according to claim 1, characterized in that said article is a composite foamed article having three phases consisting of a crust (3), a large number of foamed bodies (2) located within the crust (3), and partitioning regions (5) for separating the foamed bodies (2) from each other.

4. The article according to claim 1, characterized in that said article is a composite foamed article having three phases consisting of a crust (3), granular bodies (6) disposed within the crust (3), and a foamed body (2) filling the free space between the crust (3) and the granular bodies (6).

5. The article according to claim 1, characterized in that said article is a composite foamed article having four phases consisting of a crust (3), granular bodies (6) disposed within the crust (3), heavy granular bodies (7) disposed within the crust (3) and having a large specific gravity, and a foamed body (2) filling the free space between the crust (3) and the granular and heavy granular bodies (6, 7).

6. A method of manufacturing a plastic rotational molded article, characterized by comprising the steps of:
loading molding materials including a plastic powder or granular material in an airtight mold in an amount of at least 5% of the inner volume of the mold; and
heating the mold at temperatures which permit the plastic material loaded in the mold to be melted but not to be decomposed, said mold being subjected to a uniaxial rotation such that the rotation axis of the mold is inclined by at least 5° from a vertical line, said mold being rotated at a low rotating speed at which a centrifugal force may not be imparted to the molding materials loaded in the mold.

7. The method according to claim 6, characterized in that a mixture comprising a polyolefin, a cross-linking agent and a foaming agent is loaded in the mold for the rotational molding to obtain a low density foamed body having uniform and fine cells.

8. The method according to claim 6, characterized in that foamable granular materials are used together with a plastic powder to obtain a composite foamed article having a crust (3) and a foamed body (2) positioned within the crust.

9. A plastic rotational molded article, prepared by loading a plastic powder or granular material in an airtight mold in an amount of at least 5% of the inner volume of the mold, followed by heating the mold at temperatures which permit the plastic material loaded in the mold to be melted but not to be decomposed, said mold being subjected to a uniaxial rotation such that the rotation axis of the mold is inclined by at least 5° from a vertical line, said mold being rotated at a low rotating speed at which a centrifugal force may not be imparted to the plastic material loaded in the mold.

10. A steam kiln, characterized by comprising:
a kiln provided with a rotating shaft which is branched into four rotational shafts;
four rods connected to each other and extending in parallel with said branched rotational shafts to form a rectangular parallelepiped structure;
a bottom plate mounted in said rectangular parallelepiped structure; and
a mold fixed to said bottom plate so as to be uniaxially rotatable in accordance with rotation of the kiln to achieve a rotational molding.
